# EUROPEAN PATENT APPLICATION

(11) **EP 0 891 750 A1**
(43) Date of publication of application: **20.01.1999**
(21) Application number: 98202255.0
(22) Date of filing: 06.07.1998
(51) Int. Cl.: A61C 13/265, A61C 8/00

(54) **Fixing device for a movable prosthesis**

(30) Priority: 16.07.1997 IT RE970051
(71) Applicant: Rondini, Denni, 42044 Gualtieri (Reggio Emilia) (IT)
(72) Inventor: Rondini, Denni, 42044 Gualtieri (Reggio Emilia) (IT)
(74) Representative: Corradini, Corrado

(57) **Abstract**

A fixing device for a movable prosthesis, comprising a metal implant to be securely fixed to the bone of the dental arch, a metal pin screwed into said implant and provided with a spherical fixing head, and a resin socket element to be securely joined to the prosthesis and comprising a spherical cavity to be snap-mounted onto said spherical head. The cavity in the socket element comprises an upper portion of hemispherical profile connected by a cylindrical central portion to a lower portion in the form of a spherical ring, there being provided a spacer to be temporarily located between said spherical head and said socket element while the socket element is undergoing secure fixing to the prosthesis cavity.

## Description

This invention relates to the fixing of dental prostheses into a patient's mouth.

In the known art, such prostheses are fixed by arranging spherical fixing points projecting from the gums.

Said fixing points comprise an insert, known as the implant, of titanium or another equivalent material, which is positioned in a cavity created for the purpose in the bone of the dental arch.

Into said insert there is screwed a titanium pin provided with a spherical head to be received in a mating spherical cavity present in the prosthesis.

The prosthesis cavity contains a resin socket element, generally of teflon or another similar material, which being slightly deformable enables the prosthesis to be snap-locked to the spherical support head.

The resin socket element is sometimes covered with a shell of titanium or another equivalent material.

The described connection system is installed in the following manner.

Having stabilized the implant with the relative spherical-headed pin in the client's mouth, the socket element is snap-mounted onto the head of the pin.

The prosthesis, already provided with the cavity for receiving the socket element, is then positioned in the mouth of the patient, who closes his teeth.

The socket element is thus forced into and rigidly positioned in the cavity in the prosthesis, in which it is fixed by a glue already applied within it.

The prosthesis can be subsequently removed by snap-releasing the spherical head from the spherical cavity in the socket element.

The connection system of the known art often presents a problem which often has serious consequences.

Because of the rigid clearance-less connection between the socket element and the underlying spherical head, all the chewing forces act on this latter, to often compromise the fixing of the implant to the bone of the dental arch.

Moreover the substantial absence of clearance requires perfect vertical positioning of the implant and the relative pin.

The object of this patent is to eliminate the aforesaid drawbacks.

This object is attained in that the cavity in the socket element which is intended to receive the spherical head of the pin is not spherical but comprises a cylindrical portion.

According to the invention, a temporary spacer of soft material, such as brass, is placed on the spherical head of the pin, between this latter and socket element, when the socket element is inserted into and fixed in the cavity within the prosthesis.

Said spacer is preferably in the form of a spherical cap and maintains the base of the socket element slightly raised from the spherical head during the positioning of the prosthesis.

When the socket element has become securely fixed to the prosthesis, this latter is withdrawn and the spacer is removed to create a clearance, such that instead of resting on the pin, the prosthesis at least partly rests on the gum, to discharge thereon at least a part of the chewing forces.

The merits and operational and constructional characteristics of the invention will be apparent from the ensuing detailed description of a preferred embodiment thereof given by way of non-limiting example and illustrated in the figures of the accompanying drawings.

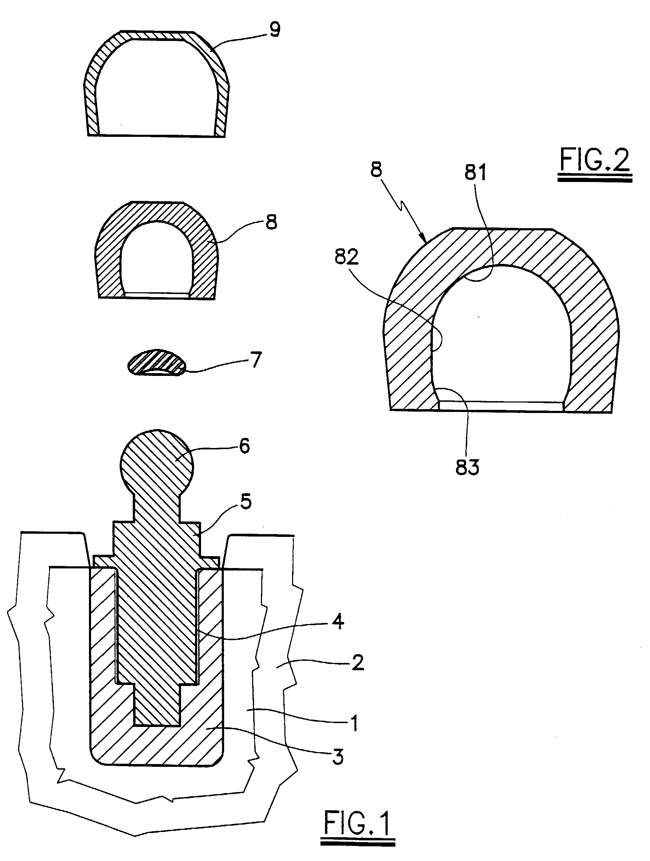

Figure 1 is an exploded view of the invention.
Figure 2 is an enlarged view of a part of the invention.
Figure 3 shows the invention arranged to receive the prosthesis.
Figure 4 shows the invention under normal conditions of use.
Figure 5 shows the invention in the case of a misaligned implant.

The figures show the bone 1 of the dental arch, covered by the gum 2.

A seat is created in the bone 1 to securely receive a titanium insert 3, commonly known as an implant, which itself comprises a threaded seat 4 into which a titanium pin 5 is to be screwed.

The pin 5 comprises a spherical head intended to project above the gum 2.

A spacer in the form of a spherical cap 7 of soft metal or resin, but generally brass, and having a thickness of a few tenths of a millimetre, preferably between 0.1 and 0.5 mm, is intended to be positioned on the spherical head 6 before there is mounted thereon the resin socket element enclosed in a titanium shell known as the socket cover.

The cavity in the socket element comprises a hemispherical upper portion 81, a cylindrical central portion 82 and a lower portion 83 in the form of a spherical ring.

In the illustrated example the upper portion and the lower portion have a radius of curvature of 0.95 mm, and the central portion has an axial dimension of 0.5 mm.

Radii of curvature of between 0.07 and 1.05 mm and cylindrical portions with axial dimensions of between 0.35 and 0.65 mm have proved equally convenient.

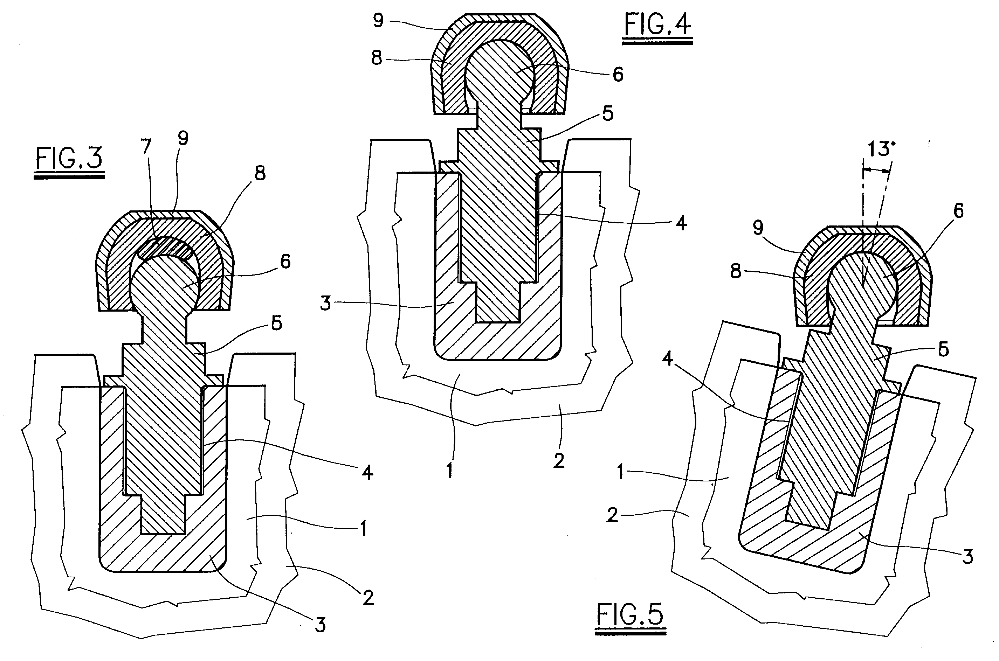

All the said components are arranged as shown in Figure 3, after which the prosthesis is positioned so that the socket element 8 and socket cover 9 become fixed in the cavity in the prosthesis.

When the socket element and socket cover have been securely fixed to the prosthesis, this latter is withdrawn and the spacer 7 is removed.

The socket element carrying the prosthesis, not shown, is now arranged as in Figure 4, in which state the prosthesis rests at least partly on the gum 2, which absorbs all or part of the chewing force, so correspondingly releasing the load on the implant.

## Claims

1. A fixing device for a movable prosthesis, comprising a metal implant to be securely fixed to the bone of the dental arch, a metal pin screwed into said implant and provided with a spherical fixing head, and a resin socket element to be securely joined to the prosthesis and comprising a spherical cavity to be snap-mounted onto said spherical head, characterised in that the cavity in the socket element comprises an upper portion of hemispherical profile connected by a cylindrical central portion to a lower portion in the form of a spherical ring, there being provided a spacer to be temporarily located between said spherical head and said socket element while the socket element is undergoing secure fixing to the prosthesis cavity.

2. A device as claimed in claim 1, characterised in that the cylindrical central portion has an axial dimension of between 0.35 and 0.65 millimetres.

3. A device as claimed in claim 1, characterised in that the upper portion and the lower portion have a radius of curvature of between 0.780 and 1.05 millimetres.

4. A device as claimed in claim 1, characterised in that said spacer is a spherical cap having a thickness of between 0.1 and 0.5 millimetres.

5. A device as claimed in claim 1, characterised in that said spacer is of copper.

6. A device as claimed in claim 1, characterised in that said spacer is of resin.

7. A device as claimed in claim 1, characterised in that said spacer is of tin.
